# EUROPEAN PATENT APPLICATION

(11) **EP 4 456 628 A1**
(43) Date of publication of application: **30.10.2024**
(21) Application number: 22909939.5
(22) Date of filing: 19.12.2022
(51) Int. Cl.: H04W 72/02

(54) **INFORMATION PROCESSING METHOD AND APPARATUS, AND READABLE STORAGE MEDIUM**

(30) Priority: 22.12.2021 CN 202111578992
(71) Applicant: Datang Mobile Communications Equipment Co., Ltd., Beijing 100085 (CN)
(72) Inventor: ZHAO, Yali, Beijing 100085 (CN); ZHANG, Huiying, Beijing 100085 (CN); ZHAI, Haitao, Beijing 100085 (CN); XU, Hao, Beijing 100085 (CN)
(74) Representative: Maiwald GmbH
(86) International application number: PCT/CN2022/140020
(87) International publication number: WO 2023/116627

(57) **Abstract**

The present disclosure discloses an information processing method and device, and a readable storage medium, and relates to the technical field of communications. The method includes: when performing data transmission on a sidelink interface, selecting, by a user equipment (UE), a target resource pool from available resource pool(s) of logical channels and/or MAC CE(s); or, performing, by the UE, LCP procedure according to a resource type of a scheduled resource.

## Description

### CROSS-REFERENCE TO RELATED APPLICATION

The present disclosure claims the priority of Chinese Application No. 202111578992.2, filed on December 22, 2021, the disclosure of which is incorporated in its entirety by reference herein.

### TECHNICAL FIELD

The present disclosure relates to the field of communication technologies, and in particular to an information processing method and device and a readable storage medium.

### BACKGROUND

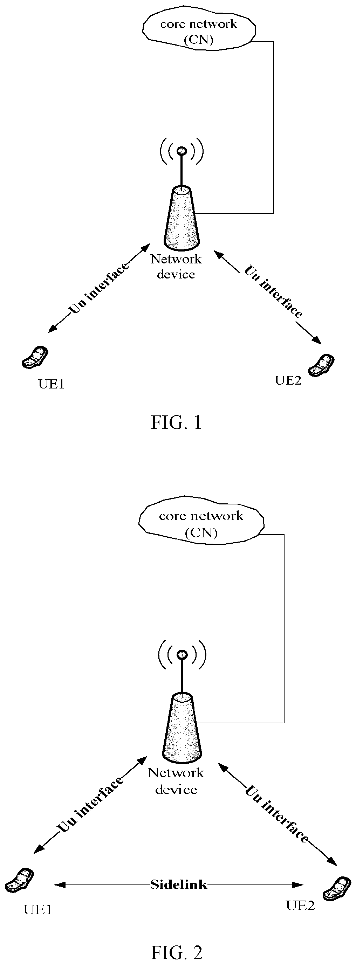

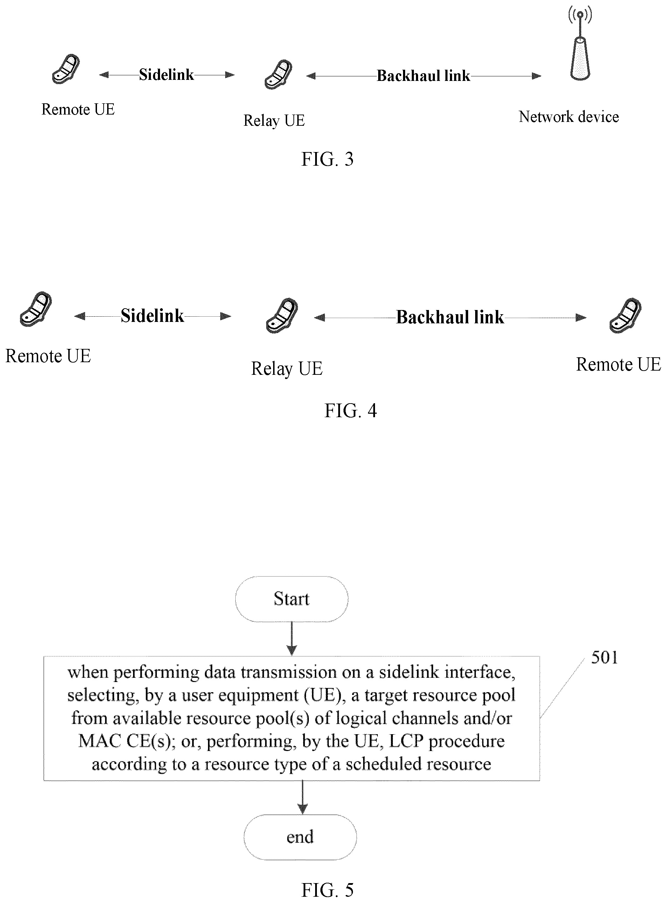

As shown in FIG. 1, the traditional wireless communication adopts the cellular network communication mode, that is, UE and a network device transmit uplink and downlink data/control information through Uu interface. As shown in FIG. 2, direct communication refers to a method in which adjacent UEs can perform data transmission through a direct communication link (also referred as sidelink (SL), bypass or PC5 link) within a short distance. A radio interface corresponding to the sidelink link is referred as a direct communication interface (also referred as a bypass interface, a sidelink interface or a PC5 interface). As shown in FIG. 3, in order to expand network coverage, introduction of relays can be considered. The relay itself may be a UE with a relay function. For UE-to-network relay (U2N relay), the interface between the relay and the network uses a Uu interface, and the interface between the relay and the relayed UE (referred to as a remote UE) uses a sidelink interface. The link between the relay and the network may be referred as a backhaul link for the remote UE. Similarly, as shown in FIG. 4, in order to expand the network coverage of UE-to-UE (U2U), a UE-to-UE relay (U2U relay) is also introduced.

Logical channel prioritization (LCP) procedure in the sidelink interface solves the problem of how to allocate resources of a sidelink interface after the UE receives a SL grant.

For transmission of a discovery message on the sidelink interface, there are two ways to design a used resource pool:
(1) Shared resource pool: that is, the discovery message and other sidelink interface transmissions (such as sidelink interface communication) use a shared resource pool;
(2) Dedicated resource pool: that is, a resource pool used by the discovery message on the sidelink interface is dedicated to the discovery message.

However, both the currently defined resource pool selection and the LCP procedure may lead to mutual occupation of resources among different types of messages, and thus it cannot ensure that the UE can allocate resources reasonably when performing resource allocation on the sidelink interface.

### SUMMARY

Embodiments of the present disclosure provide an information processing method and device and a readable storage medium, which can ensure that the UE can allocate resources reasonably for the sidelink interface when performing resource allocation on the sidelink interface.

In a first aspect, one embodiment of the present disclosure provides an information processing method, including:
selecting, by a user equipment (UE), a target resource pool from available resource pool(s) of logical channels and/or MAC CE(s), when performing data transmission on a sidelink interface; or, performing, by the UE, LCP procedure according to a resource type of a scheduled resource, when performing data transmission on a sidelink interface.

Optionally, the performing, by the UE, LCP procedure according to a resource type of a scheduled resource, includes:
determining, by the UE, a target resource type of a resource scheduled by a SCI, and
performing, by the UE, one or more of the following according to the target resource type:
   selecting a target L2 destination of a sidelink;
   selecting logical channel(s) for a sidelink;
   selecting MAC CE(s) for a sidelink.

Optionally, the target resource type includes at least one of common resource and dedicated resource;
the dedicated resource includes sidelink interface discovery dedicated resource and/or sidelink interface communication dedicated resource.

Optionally, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
   resources in a dedicated resource pool for sidelink interface communication;
   resources in a dedicated resource pool for U2U relay communication;
   resources in a dedicated resource pool for U2N relay communication;
   resources in a dedicated resource pool for L2 U2N relay communication;
   resources in a dedicated resource pool for L2 U2U relay communication;
   resources in a dedicated resource pool for L3 U2N relay communication;
   resources in a dedicated resource pool for L3 U2U relay communication.

Optionally, the determining, by the UE, a target resource type of a resource scheduled by a SCI, includes at least one of the following:
determining, by the UE, the target resource type according to resource pool configuration information;
determining, by the UE, the target resource type according to scheduling information of a network device.

Optionally, the resource pool configuration information is pre-configured, or configured by the network device through broadcast or dedicated signaling.

Optionally, the scheduling information includes indication information of the target resource type; the determining, by the UE, the target resource type according to scheduling information of a network device, includes:
determining, by the UE, the target resource type according to the indication information of the target resource type.

Optionally, the determining, by the UE, the target resource type according to resource pool configuration information, includes:
obtaining, by the UE, a resource pool to which the resource belongs, included in the scheduling information;
determining, by the UE, the target resource type according to the resource pool to which the resource belongs.

Optionally, the UE selects the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

Optionally, the UE selects the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

Optionally, the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

Optionally, when the UE is configured with both a common resource pool and a discovery-specific resource pool, the common resource pool is regarded as a communication-specific resource pool.

In a second aspect, one embodiment of the present disclosure further provides an information processing device, applied to a user equipment (UE), including: a memory, a transceiver, and a processor;
wherein the memory is used to store computer programs; the transceiver is used to send and receive data under control of the processor; the processor is used to read the computer programs in the memory and perform the following operations:
selecting a target resource pool from available resource pool(s) of logical channels and/or MAC CE(s) when performing data transmission on a sidelink interface; or, performing LCP procedure according to a resource type of a scheduled resource when performing data transmission on a sidelink interface.

Optionally, the processor is used to read the computer programs in the memory and perform the following operations:
determining a target resource type of a resource scheduled by a SCI, and
performing one or more of the following according to the target resource type:
   selecting a target L2 destination of a sidelink;
   selecting logical channel(s) for a sidelink;
   selecting MAC CE(s) for a sidelink.

Optionally, the target resource type includes at least one of common resource and dedicated resource;
the dedicated resource includes sidelink interface discovery dedicated resource and/or sidelink interface communication dedicated resource.

Optionally, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
   resources in a dedicated resource pool for sidelink interface communication;
   resources in a dedicated resource pool for U2U relay communication;
   resources in a dedicated resource pool for U2N relay communication;
   resources in a dedicated resource pool for L2 U2N relay communication;
   resources in a dedicated resource pool for L2 U2U relay communication;
   resources in a dedicated resource pool for L3 U2N relay communication;
   resources in a dedicated resource pool for L3 U2U relay communication.

Optionally, the processor is used to read the computer programs in the memory and perform the following operations:
determining the target resource type according to resource pool configuration information;
determining the target resource type according to scheduling information of a network device.

Optionally, the resource pool configuration information is pre-configured, or configured by the network device through broadcast or dedicated signaling.

Optionally, the scheduling information includes indication information of the target resource type; the processor is used to read the computer programs in the memory and perform the following operations:
determining the target resource type according to the indication information of the target resource type.

Optionally, the processor is used to read the computer programs in the memory and perform the following operations:
obtaining a resource pool to which the resource belongs, included in the scheduling information;
determining the target resource type according to the resource pool to which the resource belongs.

Optionally, the processor is used to read the computer programs in the memory and perform the following operations:
selecting the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

Optionally, the processor is used to read the computer programs in the memory and perform the following operations:
selecting the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

Optionally, the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

Optionally, when the UE is configured with both a common resource pool and a discovery-specific resource pool, the common resource pool is regarded as a communication-specific resource pool.

In a third aspect, one embodiment of the present disclosure further provides an information processing device applied to a user equipment (UE), including:
a first selection unit configured to select a target resource pool from available resource pool(s) of logical channels and/or MAC CE(s) when performing data transmission on a sidelink interface; or,
a first processing unit configured to perform LCP procedure according to a resource type of a scheduled resource when performing data transmission on a sidelink interface.

Optionally, the first processing unit includes:
a first determination subunit configured to determine a target resource type of a resource scheduled by a SCI, and
a first processing subunit configured to perform one or more of the following according to the target resource type:
selecting a target L2 destination of a sidelink;
selecting logical channel(s) for a sidelink;
selecting MAC CE(s) for a sidelink.

Optionally, the target resource type includes at least one of common resource and dedicated resource;
the dedicated resource includes sidelink interface discovery dedicated resource and/or sidelink interface communication dedicated resource.

Optionally, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
   resources in a dedicated resource pool for sidelink interface communication;
   resources in a dedicated resource pool for U2U relay communication;
   resources in a dedicated resource pool for U2N relay communication;
   resources in a dedicated resource pool for L2 U2N relay communication;
   resources in a dedicated resource pool for L2 U2U relay communication;
   resources in a dedicated resource pool for L3 U2N relay communication;
   resources in a dedicated resource pool for L3 U2U relay communication.

Optionally, the first determining subunit is configured to perform any of the following:
determining the target resource type according to resource pool configuration information;
determining the target resource type according to scheduling information of a network device.

Optionally, the resource pool configuration information is pre-configured, or configured by the network device through broadcast or dedicated signaling.

Optionally, the scheduling information includes indication information of the target resource type; the first determining subunit is configured to determine the target resource type according to the indication information of the target resource type.

Optionally, the first determining subunit includes:
a first obtaining module configured to obtain a resource pool to which the resource belongs, included in the scheduling information;
a first determining module configured to determine the target resource type according to the resource pool to which the resource belongs.

Optionally, the first processing subunit is configured to select the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

Optionally, the first processing subunit is configured to select the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

Optionally, the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

Optionally, when the UE is configured with both a common resource pool and a discovery-specific resource pool, the common resource pool is regarded as a communication-specific resource pool.

In a fourth aspect, one embodiment of the present disclosure further provides a processor-readable storage medium, including a computer program stored thereon; wherein the computer program, when executed by a processor, causes the processor to perform the above method.

In the embodiment of the present disclosure, when performing data transmission on a sidelink interface, the UE selects the target resource pool from the available resource pools of the logical channel and/or MAC CE(s), or the UE performs the LCP procedure according to the resource type of the scheduled resource. Therefore, by using the solution of the embodiments of the present disclosure, resource selection can be reasonably performed, or resource allocation can be reasonably performed for different resource types when performing LCP, thereby ensuring that the UE can allocate resources reasonably for the sidelink interface when performing resource allocation for the sidelink interface.

### BRIEF DESCRIPTION OF THE DRAWINGS

FIG. 1 is a schematic diagram of traditional wireless communication using a cellular network communication method;
FIG. 2 is a schematic diagram of sidelink communication;
FIG. 3 is a first schematic diagram of relay communication;
FIG. 4 is a second schematic diagram of relay communication;
FIG. 5 is a first flowchart of an information processing method according to an embodiment of the present disclosure;
FIG. 6 is a second flowchart of an information processing method according to an embodiment of the present disclosure;
FIG. 7 is a third flowchart of an information processing method according to an embodiment of the present disclosure;
FIG. 8 is a first schematic diagram of an information processing device according to an embodiment of the present disclosure; and
FIG. 9 is a second schematic diagram of an information processing device according to an embodiment of the present disclosure.

### DETAILED DESCRIPTION

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

In the related art, the currently defined resource pool selection and LCP procedure only considers a single factor. For example, the resource pool selection only considers whether a physical sidelink feedback channel (PSFCH) is configured, and LCP allocates resources based only on priorities of logical channels or MAC CE(s), which may lead to mutual occupation of resources among different types of messages, and thus it cannot ensure that the UE can allocate resources reasonably when performing resource allocation on the sidelink interface.

In order to solve the above problems, embodiments of the present disclosure provide an information processing method and device, and a readable storage medium, which can ensure that UE can allocate resources reasonably when performing resource allocation on the sidelink interface.

The method and the device are based on the same application concept. Since the method and the device solve the problem in a similar manner, the implementation of the device and the method can refer to each other, and the repeated parts will not be repeated.

Referring to FIG. 5, FIG. 5 is a flowchart of an information processing method according to an embodiment of the present disclosure. As shown in FIG. 5, the method includes the following steps.

Step 501: when performing data transmission on a sidelink interface, selecting, by a user equipment (UE), a target resource pool from available resource pools of logical channels and/or MAC CE(s); or, performing, by the UE, LCP procedure according to a resource type of a scheduled resource.

During the process that the UE performs LCP procedure according to the resource type of the scheduled resource, the UE determines a target resource type of the resource scheduled by a SCI, and performs one or more of the following according to the target resource type:
selecting a target L2 destination of a sidelink;
selecting logical channel(s) for a sidelink;
selecting MAC CE(s) for a sidelink.

The target resource type includes at least one of common resource and dedicated resource. The dedicated resource includes sidelink interface discovery dedicated resource and/or sidelink interface communication dedicated resource.

In the embodiment of the present disclosure, in order to improve flexibility of resource allocation, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery.

Alternatively, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

During the process of the UE determining the target resource type of the resources scheduled by the SCI, the UE may determine the target resource type in any of the following ways:
(1) the UE determines the target resource type according to resource pool configuration information.

The resource pool configuration information is pre-configured, or configured by the network device through broadcast or dedicated signaling.

Specifically, in this step, the UE obtains a resource pool to which the resource belongs, included in the scheduling information; and determines the target resource type according to the resource pool to which the resource belongs.

For example, the UE may determine the target resource type according to a resource type corresponding to the resource pool to which the resource belongs.

(2) The UE determines the target resource type according to scheduling information of the network device.

The scheduling information includes indication information of a target resource type, which may be used to indicate a specific type of a resource and the like. Here, the UE determines the target resource type according to the indication information of the target resource type.

For example, if the resource type indicated in the scheduling information is a discovery dedicated resource, the UE may determine that the target resource type is a discovery dedicated resource.

In the above process, the UE may select the target L2 destination of the sidelink according to the target resource type as follows:
(1) determining MAC CE(s) or logical channel with the highest priority from MAC CE(s) and logical channels that meet a preset condition and are corresponding to all communication types of the sidelink interface;
(2) taking a target destination corresponding to the MAC CE(s) or logical channel with the highest priority as the target L2 destination of the sidelink.

The preset condition at least includes: when the resource type is a dedicated resource, the MAC CE(s) and/or logical channel is allowed to use the dedicated resource.

That is to say, when the scheduled resource type is a dedicated resource, the MAC CE(s) and/or logical channel that are allowed to use the dedicated resource are first determined, and then MAC CE(s) or logical channel with the highest priority are selected from the MAC CE(s) and/or logical channel that are allowed to use the dedicated resource, and then a target destination corresponding to the MAC CE(s) or logical channel with the highest priority is taken as the target L2 destination of the sidelink

In the above process, the UE selects the logical channel of the sidelink or the MAC CE(s) of the sidelink according to the target resource type in any of the following ways:
(1) determining MAC CE(s) or logical channel with the highest priority from MAC CE(s) and logical channels that meet a preset condition and are corresponding to all communication types of the sidelink interface;
(2) taking a target destination corresponding to the MAC CE(s) or logical channel with the highest priority as the target L2 destination of the sidelink;
(3) among logical channels or MAC CE(s) corresponding to the target L2 destination of the sidelink interface, selecting logical channel(s) and/or MAC CE(s) satisfying a preset condition as the logical channel of the sidelink and/or MAC CE(s) of the sidelink.

The preset condition at least includes: when the resource type is a dedicated resource, the MAC CE(s) and/or logical channel is allowed to use the dedicated resource.

In the above embodiments, the available resource pool of the logical channel and/or MAC CE(s) is determined in any of the following manners:
if the logical channel and/or MAC CE(s) can only use one or more dedicated resource pools, taking the one or more dedicated resource pools as the available resource pools of the logical channel and/or MAC CE(s);
if the logical channel and/or MAC CE(s) can only use one or more shared resource pools, taking the one or more shared resource pools as the available resource pools of the logical channel and/or MAC CE(s);
if the logical channel and/or MAC CE(s) can use one or more shared resource pools and dedicated resource pools, taking the one or more shared resource pools and dedicated resource pools as the available resource pools of the logical channel and/or MAC CE(s).

That is to say, in the above process, the target resource pool needs to be selected from available resource pools of the logical channel and/or MAC CE(s), to perform data transmission on the sidelink interface.

In the embodiment of the present disclosure, when the UE is configured with both a common resource pool and a discovery-specific resource pool, the common resource pool is regarded as a communication-specific resource pool.

In the embodiment of the present disclosure, when performing data transmission on a sidelink interface, the UE selects the target resource pool from the available resource pools of the logical channel and/or MAC CE(s), or the UE performs the LCP procedure according to the resource type of the scheduled resource. Therefore, by using the solution of the embodiments of the present disclosure, resource selection can be reasonably performed, or resource allocation can be reasonably performed for different resource types when performing LCP, thereby ensuring that the UE can allocate resources reasonably for the sidelink interface when performing resource allocation for the sidelink interface.

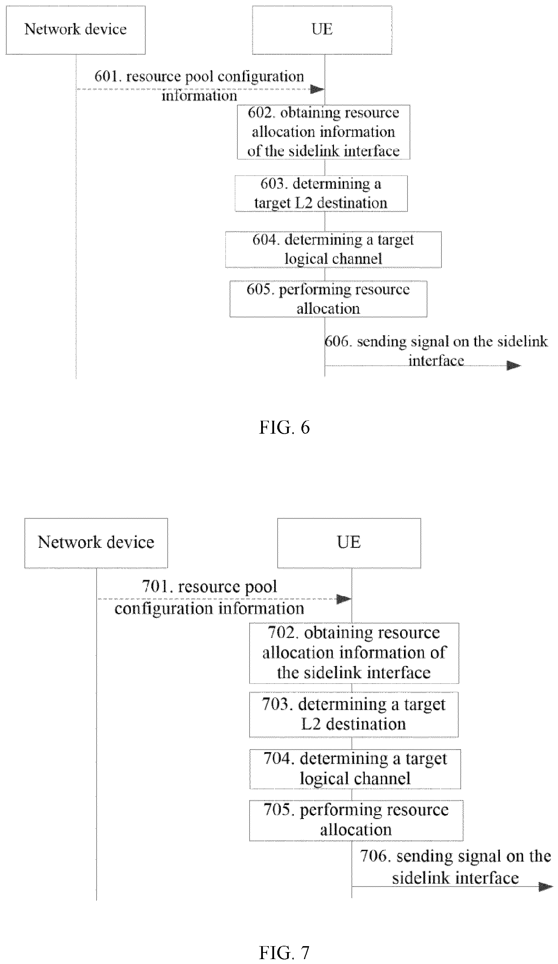

Referring to FIG. 6, FIG. 6 is a flowchart of an information processing method according to an embodiment of the present disclosure. In FIG. 6, the target destination is determined only according to the resource type. As shown in FIG. 6, the method includes the following steps.

Step 601: sending, by a network device, resource pool configuration information to a user equipment (UE).

This step is optional and only applicable to online UEs. If the online UE is in an idle/inactive state, the resource pool configuration information is sent by broadcast message; if the online terminal is in a connected state, the resource pool configuration information can be sent by broadcast or dedicated signaling. If the UE is in an offline state (that is, not within the coverage of the network), this step can be omitted, and the UE can directly use pre-configured resource pool configuration information.

The resource pool configuration information needs to indicate a resource type corresponding to the resource pool. The resource type may be but not limited to one of the following: common resource and dedicated resource. The dedicated resource includes sidelink interface discovery dedicated resource and/or sidelink interface communication dedicated resource.

In the embodiment of the present disclosure, in order to improve flexibility of resource allocation, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery.

Alternatively, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

Step 602: obtaining resource allocation information of the sidelink interface.

Specifically, if the UE is in the radio resource control (RRC) connected state, the resource allocation information of the sidelink interface can be obtained in a resource allocation mode scheduled by the network or a resource allocation mode selected by the UE. If the UE is in an idle state/inactive state or an offline state, the resource allocation information of the sidelink interface can be obtained in a resource allocation mode selected by the UE.

After obtaining the resource allocation information of the sidelink interface, the UE can determine a resource scheduled by SCI in the SCI to be sent.

Step 603: determining a target destination.

If the resource scheduled by the SCI is used for new data transmission, the UE needs to select the target L2 destination of the sidelink interface according to the resource type of the resource scheduled by the SCI, which may specifically include the following two manners:
(1) if the resource type of the resource scheduled by the SCI is a resource in the common resource pool, then an existing target destination selection method is used to select the target destination;
(2) if the resource type of the resource scheduled by the SCI is a resource in a dedicated resource pool, when the UE selects a target destination according to the logical channel and/or the sidelink interface MAC CE(s), it needs to consider logical channels and/or sidelink interface MAC CE(s) that can use the resources in the dedicated resource pool for data transmission.

Specifically, one selection process of the target destination is as follows.

When the UE receives SCI for new data transmission, the UE first determines MAC CE(s) or logical channel with the highest priority from MAC CE(s) and logical channels that meet a preset condition and are corresponding to all communication types (including unicast, groupcast and broadcast) of the sidelink interface; and takes a target destination corresponding to the MAC CE(s) or logical channel with the highest priority as the target L2 destination of the sidelink. The specific condition that MAC CE(s) or logical channel with the highest priority need to meet include:
the logical channel has available sidelink data; and,
SBj>0 (the number of tokens in a token bucket corresponding to the sidelink interface logical channel); and,
if a SL grant is a type 1 pre-configured grant (CG), the logical channel needs to be configured with a sidelink configuration grant type 1 allow (sl-configuredGrantType1Allowed) and a value of sl-configuredGrantType1Allowed is set to true; and,
if the logical channel is configured with a sidelink allow preconfigured grant list (sl-AllowedCG-List), the sl-AllowedCG-List needs to include an index of SL CG corresponding to a current SL grant; and,
if the SL grant corresponding to the SCI is not configured with a physical sidelink feedback channel (PSFCH), then the sidelink hybrid automatic repeat response feedback enable (sl-HARQ-FeedbackEnabled) corresponding to the logical channel needs to be set to disabled.

If the resource type is a dedicated resource, the logical channel and/or MAC CE(s) need to be allowed to use the dedicated resource.

For example, if the dedicated resource is dedicated resources for U2N relay discovery, only logical channels and/or MAC CE(s) corresponding to U2N relay discovery can be selected, such as sidelink-signaling radio bearer 4 (SL -SRB4).

In practical applications, if both a shared resource pool and a discovery-related dedicated resource pool are configured, the shared resource pool can be regarded as a communication dedicated resource pool during the LCP procedure.

Step 604: determining a target logical channel under the target destination.

It is assumed that logical channels using different resource types will not share the same target destination. Therefore, after the target destination is determined, it is only necessary to select the target logical channel under the target destination according to an existing target logical channel selection condition without enhancement.

Specifically, logical channel(s) satisfying the following conditions is selected from the logical channels corresponding to the target destination:
logical channel(s) has available sidelink data; and,
if a SL grant is a type 1 Cell Group (CG), the logical channel needs to be configured with sl-configuredGrantType1Allowed and a value of sl-configuredGrantType1Allowed is set to true; and,
if the logical channel is configured with sl-AllowedCG-List, the sl-AllowedCG-List needs to contain an index of a SL CG corresponding to the current SL grant; and,
if the SL grant corresponding to the SCI is not configured with PSFCH, the sl-HARQ-FeedbackEnabled corresponding to the logical channel needs to be set to disabled; and,

(1) if the SL grant corresponding to the SCI is configured with PSFCH:
   if the sl-HARQ-FeedbackEnabled corresponding to the logical channel with the highest priority that satisfies the above conditions (several conditions before this condition) is enabled, the logical channel to be selected also needs to meet the condition that its sl-HARQ-FeedbackEnabled is enabled; or,
   if the sl-HARQ-FeedbackEnabled corresponding to the logical channel with the highest priority that satisfies the above conditions (several conditions before this condition) is disabled, the logical channel to be selected also needs to meet the condition that its sl-HARQ-FeedbackEnabled is disabled;
(2) if the SL grant corresponding to the SCI is not configured with PSFCH:
   A value of the sl-HARQ-FeedbackEnabled of the logical channel needs to be set to disabled.

Step 605: performing resource allocation for the target logical channel under the target destination.

The specific resource allocation process can follow the existing resource allocation method, and the specific process is as follows.

For selected logical channels with SBj>0, resources are allocated to their sPBR in descending order of priorities of the logical channels. If the sPBR corresponding to a certain logical channel is set to infinite, an MAC entity allocates resources for all data of the logical channel;
The SBj corresponding to each logical channel is updated.

If there are still remaining resources, resource allocation is performed in strict accordance with the above determined priority order of all logical channels, until all data of the logical channels are allocated resources or the resources are exhausted. Logical channels of the same priority should be treated fairly.

Step 606: sending signal on the sidelink interface.

Based on the step 605, after the resource allocation is completed, the UE can organize an MAC protocol data unit (PDU), and determine a hybrid automatic repeat request (HARQ) process number in the SCI, and whether HARQ feedback is required, etc., and then send SCI and MAC PDUs on the sidelink interface.

Referring to FIG. 7, FIG. 7 is a flowchart of an information processing method according to an embodiment of the present disclosure. In FIG. 7, the target destination and the logical channel and/or MAC CE(s) under the target destination need to be determined according to the resource type. As shown in FIG. 7, the method includes the following steps.

Step 701: sending, by a network device, resource pool configuration information to a user equipment (UE).

This step is optional and only applicable to online UEs. If the online UE is in an idle/inactive state, the resource pool configuration information is sent by broadcast message; if the online UE is in a connected state, the resource pool configuration information is sent by broadcast or dedicated signaling.

If the UE is offline (that is, not within the coverage of the network), this step can be omitted, and the UE can directly use preconfigured resource pool configuration information.

The resource pool configuration information needs to indicate a resource type corresponding to the resource pool. The resource type may be but not limited to one of the following: common resource and dedicated resource. The dedicated resource includes sidelink interface discovery dedicated resource and/or sidelink interface communication dedicated resource.

In the embodiment of the present disclosure, in order to improve flexibility of resource allocation, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery.

Alternatively, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

Step 702: obtaining resource allocation information of the sidelink interface.

Specifically, if the UE is in the radio resource control (RRC) connected state, the resource allocation information of the sidelink interface can be obtained in a resource allocation mode scheduled by the network or a resource allocation mode selected by the UE. If the UE is in an idle state/inactive state or an offline state, the resource allocation information of the sidelink interface can be obtained in a resource allocation mode selected by the UE.

After obtaining the resource allocation information of the sidelink interface, the UE can determine a resource scheduled by SCI in the SCI to be sent.

Step 703: determining an L2 target destination.

If the resource scheduled by the SCI is used for new data transmission, the UE needs to select the target L2 destination of the sidelink interface according to the resource type of the resource scheduled by the SCI, which may specifically include the following two manners:
(1) if the resource type of the resource scheduled by the SCI is a resource in the common resource pool, then an existing target destination selection method is used to select the target destination;
(2) if the resource type of the resource scheduled by the SCI is a resource in a dedicated resource pool, when the UE selects a target destination according to the logical channel and/or the sidelink interface MAC CE(s), it only needs to consider logical channels and/or sidelink interface MAC CE(s) that can use the resources in the dedicated resource pool for data transmission.

Specifically, one selection process of the target destination is as follows.

When the UE receives SCI for new data transmission, the UE first determines MAC CE(s) or logical channel with the highest priority from MAC CE(s) and logical channels that meet a preset condition and are corresponding to all communication types (including unicast, groupcast and broadcast) of the sidelink interface; and takes a target destination corresponding to the MAC CE(s) or logical channel with the highest priority as the target L2 destination of the sidelink. The specific condition that MAC CE(s) or logical channel needs to meet include:
the logical channel has available sidelink data; and,
SBj>0 (the number of tokens in a token bucket corresponding to the sidelink interface logical channel); and,
if a SL grant is a type 1 pre-configured grant (CG), the logical channel needs to be configured with a sidelink configuration grant type 1 allow (sl-configuredGrantType1Allowed) and a value of sl-configuredGrantType1Allowed is set to true; and,
if the logical channel is configured with a sidelink allow preconfigured grant list (sl-AllowedCG-List), the sl-AllowedCG-List needs to include an index of SL CG corresponding to a current SL grant; and,
if the SL grant corresponding to the SCI is not configured with a physical sidelink feedback channel (PSFCH), then the sidelink hybrid automatic repeat response feedback enable (sl-HARQ-FeedbackEnabled) corresponding to the logical channel needs to be set to disabled.
If the resource type is a dedicated resource, the logical channel and/or MAC CE(s) need to be allowed to use the dedicated resource.

For example, if the dedicated resource is dedicated resources for U2N relay discovery, only logical channels and/or MAC CE(s) corresponding to U2N relay discovery can be selected, such as sidelink-signaling radio bearer 4 (SL -SRB4).

In practical applications, if both a shared resource pool and a discovery-related dedicated resource pool are configured, the shared resource pool can be regarded as a communication dedicated resource pool during the LCP procedure.

Step 704: determining a target logical channel under the target destination.

It is assumed that logical channels and/or MAC CE(s) using different resource types may share the same target destination. Therefore, after the target destination is determined, it is further necessary to select the target logical channel and/or MAC CE(s) based on the resource type. The specific process is as follows.

After determining the target destination, it is further necessary to select logical channel(s) and/or MAC CE(s) satisfying the following conditions from logical channels corresponding to the target destination:
logical channel(s) has available sidelink data; and,
if a SL grant is a type 1 CG, the logical channel needs to be configured with sl-configuredGrantType1Allowed and a value of sl-configuredGrantType1Allowed is set to true; and,
if the logical channel is configured with sl-AllowedCG-List, the sl-AllowedCG-List needs to contain an index of a SL CG corresponding to the current SL grant; and,
if the SL grant corresponding to the SCI is not configured with PSFCH, the sl-HARQ-FeedbackEnabled corresponding to the logical channel needs to be set to disabled; and,

(1) if the SL grant corresponding to the SCI is configured with PSFCH:
   if the sl-HARQ-FeedbackEnabled corresponding to the logical channel with the highest priority that meets the above conditions (several conditions before this condition) is enabled, the logical channel to be selected also needs to meet the condition that its sl-HARQ-FeedbackEnabled is enabled; or,
   if the sl-HARQ-FeedbackEnabled corresponding to the logical channel with the highest priority that satisfies the above conditions (several conditions before this condition) is disabled, the logical channel to be selected also needs to meet the condition that its sl-HARQ-FeedbackEnabled is disabled.
(2) if the SL grant corresponding to the SCI is not configured with PSFCH:
   a value of the sl-HARQ-FeedbackEnabled of the logical channel needs to be set to disabled.

If the resource type is a dedicated resource, the logical channel and/or MAC CE(s) needs to be allowed to use the dedicated resource.

For example, if the dedicated resources are dedicated resources for U2N relay discovery, only logical channels and/or MAC CE(s) corresponding to U2N relay discovery can be selected, such as SL-SRB4.

In practical applications, if both a shared resource pool and a discovery-related dedicated resource pool are configured, the shared resource pool can be regarded as a communication dedicated resource pool during the LCP procedure.

Step 705: performing resource allocation for the target logical channel under the L2 target destination.

The specific resource allocation process can follow the existing resource allocation method, and the specific process is as follows.

For selected logical channels with SBj>0, resources are allocated to their sPBR in descending order of priorities of the logical channels. If the sPBR corresponding to a certain logical channel is set to infinite, an MAC entity allocates resources for all data of the logical channel;

The SBj corresponding to each logical channel is updated.

If there are still remaining resources, resource allocation is performed in strict accordance with the above determined priority order of all logical channels, until all data of the logical channels are allocated resources or the resources are exhausted. Logical channels of the same priority should be treated fairly.

Step 706: sending signal on the sidelink interface.

Based on the step 705, after the resource allocation is completed, the UE can organize an MAC protocol data unit (PDU), and determine a hybrid automatic repeat request (HARQ) process number in the SCI, and whether HARQ feedback is required, etc., and then send SCI and MAC PDUs on the sidelink interface.

In one embodiment of the present disclosure, for the sidelink interface resource allocation mode self-selected by the UE, the current resource pool selection principle is only to select the resource pool according to HARQ feedback attribute (HARQ feedback includes enable and disable) of the logical channel. If the HARQ feedback attribute corresponding to the logical channel is enabled, then a resource pool configured with a physical sidelink feedback channel (PSFCH) needs to be selected. After the introduction of dedicated resource pools, for UEs using UE self-selected resources (Mode 2), the resource pool selection needs to be enhanced. The specific enhancements are as follows.

After the introduction of dedicated resource pools, for UEs that use UE self-selected resources (Mode 2), the resource pool selection details are as follows.

If a HARQ feedback attribute of logical channel(s) is set to enable, any one resource pool configured with PSFCH is selected from the available resource pools corresponding to the logical channel and/or MAC CE(s); otherwise, any one resource pool is selected from the available resource pools corresponding to the logical channel and/or MAC CE(s).

The available resource pools of the logical channel and/or MAC CE(s) is determined by any of the following manners:
if the logical channel and/or MAC CE(s) can only use one or more dedicated resource pools, taking the one or more dedicated resource pools as the available resource pools of the logical channel and/or MAC CE(s);
if the logical channel and/or MAC CE(s) can only use one or more shared resource pools, taking the one or more shared resource pools as the available resource pools of the logical channel and/or MAC CE(s);
if the logical channel and/or MAC CE(s) can use one or more shared resource pools and dedicated resource pools, taking the one or more shared resource pools and dedicated resource pools as the available resource pools of the logical channel and/or MAC CE(s).

For example, if the logical channel can only use a dedicated resource pool corresponding to the logical channel, the dedicated resource pool is regarded as available resource pool(s) for the logical channel; if the logical channel corresponds to sidelink communication, and a base station configures both a shared resource pool and a discovery-related dedicated resource pool, the shared resource pool is regarded as the dedicated resource pool of the logical channel. If the logical channel can only use the shared resource pool, the shared resource pool is regarded as the available resource pool of the logical channel; if the logical channel can use the dedicated resource pool and the shared resource pool at the same time, the dedicated resource pool and the shared resource pool are regarded as the available resource pool of logical channel.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

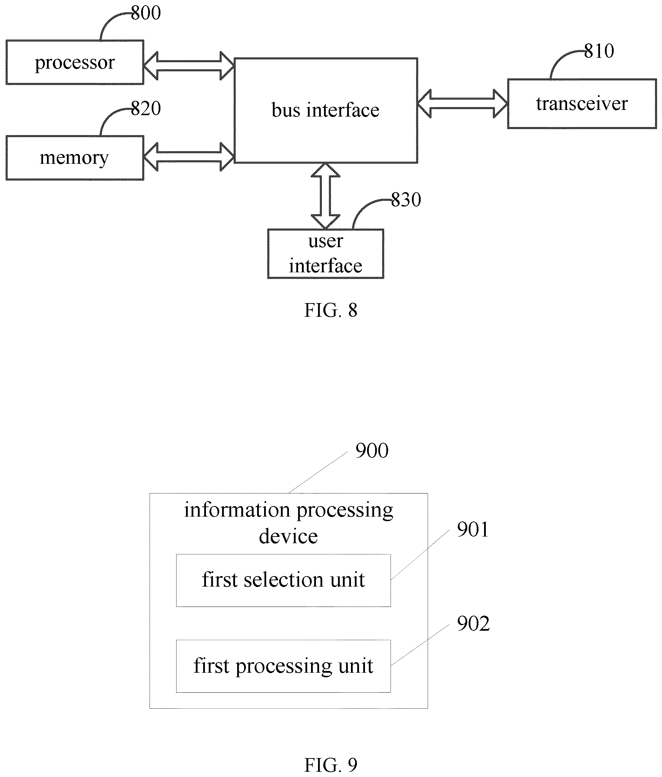

As shown in FIG. 8, one embodiment of the present disclosure provides an information processing device applied to a UE. The information processing device includes: a processor 800 configured to read a program in a memory 820 and execute the following process:
when performing data transmission on a sidelink interface, selecting a target resource pool from available resource pool(s) of logical channels and/or MAC CE(s); or, performing LCP procedure according to a resource type of a scheduled resource.

The transceiver 810 is used to receive and send data under control of the processor 800.

In FIG. 8, a bus architecture may include any number of interconnected bus and bridge. Specifically, various circuits of one or more processors, which are represented by the processor 800, and one or more memories, which are represented by the memory 820, are linked together. The bus architecture may link various other circuits, such as a peripheral device, voltage regulator and a power management circuit together. These features are well known in this field; therefore, this disclosure does not make further description on these features. The bus interface provides an interface. The transceiver 810 may be multiple elements, including a transmitter and a receiver and provide units, which communicate with other devices on the transmission medium. For different UEs, a user interface 830 may be an interface that can be connected to external or internal devices. The connected devices include but are not limited to a small keyboard, a display, a speaker, a microphone, a joystick, etc.

The processor 800 is responsible for managing the bus architecture and the normal processing. The memory 820 may be used to store data used by the processor 800 for performing operations.

The processor 810 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

The processor 800 is further used to read the program and perform the following steps:
determining a target resource type of a resource scheduled by a SCI, and
performing one or more of the following according to the target resource type:
selecting a target L2 destination of a sidelink;
selecting logical channel(s) for a sidelink;
selecting MAC CE(s) for a sidelink.

Optionally, the target resource type includes at least one of common resource and dedicated resource;
the dedicated resource includes sidelink interface discovery dedicated resource and/or sidelink interface communication dedicated resource.

Optionally, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
   resources in a dedicated resource pool for sidelink interface communication;
   resources in a dedicated resource pool for U2U relay communication;
   resources in a dedicated resource pool for U2N relay communication;
   resources in a dedicated resource pool for L2 U2N relay communication;
   resources in a dedicated resource pool for L2 U2U relay communication;
   resources in a dedicated resource pool for L3 U2N relay communication;
   resources in a dedicated resource pool for L3 U2U relay communication.

Optionally, the processor 800 is further used to read the program and perform any one of the following operations:
determining the target resource type according to resource pool configuration information;
determining the target resource type according to scheduling information of a network device.

Optionally, the resource pool configuration information is pre-configured, or configured by the network device through broadcast or dedicated signaling.

Optionally, the scheduling information includes indication information of the target resource type; the processor 800 is used to read the computer programs in the memory and perform the following operations:
determining the target resource type according to the indication information of the target resource type.

The processor is further used to read the computer programs in the memory and perform the following operations:
obtaining a resource pool to which the resource belongs, included in the scheduling information;
determining the target resource type according to the resource pool to which the resource belongs.

Optionally, the processor 800 is further used to read the program, and perform the following steps:
selecting the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

Optionally, the processor 800 is further used to read the program, and perform the following steps:
selecting the logical channel for the sidelink or the MAC CE(s) for the sidelink according to the target resource type in a manner including:
   determining an MAC CE(s) or logical channel(s) with a highest priority from MAC CE(s) and logical channels that meet a preset condition and are corresponding to all communication types of the sidelink interface;
   taking a target destination corresponding to the MAC CE(s) or logical channel with the highest priority as the target L2 destination of the sidelink;
   in logical channels or MAC CE(s) corresponding to the target L2 destination of the sidelink interface, selecting logical channel(s) and/or MAC CE(s) satisfying a preset condition as the logical channel of the sidelink and/or MAC CE(s) of the sidelink;
   wherein the preset condition at least includes: when the resource type is a dedicated resource, the MAC CE(s) and/or logical channel is allowed to use the dedicated resource.

Optionally, the available resource pool of the logical channel and/or MAC CE(s) is determined in any of the following manners:
if the logical channel and/or MAC CE(s) is capable of only using one or more dedicated resource pools, taking the one or more dedicated resource pools as the available resource pool of the logical channel and/or MAC CE(s);
if the logical channel and/or MAC CE(s) is capable of only using one or more shared resource pools, taking the one or more shared resource pools as the available resource pool of the logical channel and/or MAC CE(s);
if the logical channel and/or MAC CE(s) is capable of using one or more shared resource pools and dedicated resource pools, taking the one or more shared resource pools and dedicated resource pools as the available resource pool of the logical channel and/or MAC CE(s).

Optionally, when the UE is configured with both a common resource pool and a discovery-specific resource pool, the common resource pool is regarded as a communication-specific resource pool.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 9, one embodiment of the present disclosure provides an information processing device 900 applied to a UE, including:
a first selection unit 901 configured to, when performing data transmission on a sidelink interface, select a target resource pool from available resource pool(s) of logical channels and/or MAC CE(s); or,
a first processing unit 902 configured to, when performing data transmission on a sidelink interface, perform LCP procedure according to a resource type of a scheduled resource.

Optionally, the first processing unit 902 includes:
a first determination subunit configured to determine a target resource type of a resource scheduled by a SCI, and
a first processing subunit configured to perform one or more of the following according to the target resource type:
   selecting a target L2 destination of a sidelink;
   selecting logical channel(s) for a sidelink;
   selecting MAC CE(s) for a sidelink.

Optionally, the target resource type includes at least one of common resource and dedicated resource;
the dedicated resource includes sidelink interface discovery dedicated resource and/or sidelink interface communication dedicated resource.

Optionally, the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
   resources in a dedicated resource pool for sidelink interface communication;
   resources in a dedicated resource pool for U2U relay communication;
   resources in a dedicated resource pool for U2N relay communication;
   resources in a dedicated resource pool for L2 U2N relay communication;
   resources in a dedicated resource pool for L2 U2U relay communication;
   resources in a dedicated resource pool for L3 U2N relay communication;
   resources in a dedicated resource pool for L3 U2U relay communication.

Optionally, the first determining subunit is configured to perform any of the following:
determining the target resource type according to resource pool configuration information;
determining the target resource type according to scheduling information of a network device.

Optionally, the resource pool configuration information is pre-configured, or configured by the network device through broadcast or dedicated signaling.

Optionally, the scheduling information includes indication information of the target resource type; the first determining subunit is configured to determine the target resource type according to the indication information of the target resource type.

Optionally, the first determining subunit includes:
a first obtaining module configured to obtain a resource pool to which the resource belongs, included in the scheduling information;
a first determining module configured to determine the target resource type according to the resource pool to which the resource belongs.

Optionally, the first processing subunit is configured to select the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

Optionally, the first processing subunit is configured to select the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
in logical channels or MAC CE(s) corresponding to the target L2 destination of the sidelink interface, selecting logical channel(s) and/or MAC CE(s) satisfying a preset condition as the logical channel of the sidelink and/or MAC CE(s) of the sidelink;
wherein the preset condition at least includes: when the resource type is a dedicated resource, the MAC CE(s) and/or logical channel is allowed to use the dedicated resource.

Optionally, the available resource pool of the logical channel and/or MAC CE(s) is determined in any of the following manners:
if the logical channel and/or MAC CE(s) is capable of only using one or more dedicated resource pools, taking the one or more dedicated resource pools as the available resource pool of the logical channel and/or MAC CE(s);
if the logical channel and/or MAC CE(s) is capable of only using one or more shared resource pools, taking the one or more shared resource pools as the available resource pool of the logical channel and/or MAC CE(s);
if the logical channel and/or MAC CE(s) is capable of using one or more shared resource pools and dedicated resource pools, taking the one or more shared resource pools and dedicated resource pools as the available resource pool of the logical channel and/or MAC CE(s).

Optionally, when the UE is configured with both a common resource pool and a discovery-specific resource pool, the common resource pool is regarded as a communication-specific resource pool.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes a computer program stored thereon. The computer program is used to cause a processor to execute the foregoing information processing method, and the same technical effect can be achieved. To avoid repetition, it will not be repeated here. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be noted that the terms such as "comprising" and "having" as well as any variations thereof, are intended to cover a non-exclusive inclusion, for example, a process, method, system, product or apparatus including a sequence of steps or units is not necessarily limited to those steps or units that are expressly listed, but may include other steps or units that are not expressly listed or inherent to the process, method, product or apparatus.

It is to be noted that, in the present disclosure, the terms "include", "including" or any other variations thereof are intended to cover a non-exclusive inclusion, such that a process, method, article or device that includes a series of elements not only includes those elements, but also includes other elements which not expressly listed or inherent to the process, method, article or device. Without further limitations, an element defined by a statement "includes a..." does not exclude presence of additional identical elements in a process, method, article or device that includes that element.

Through the above description of the embodiments, those skilled in the art can clearly understand that the methods of the above embodiments may be implemented by means of software plus necessary general hardware platform, of course, implemented by hardware, but in many cases the former is better. According to such understanding, the essence of the technical solution of the present disclosure or the part that contributes to the related art may be embodied in the form of a software product. The computer software product is stored in a storage medium (such as ROM/RAM, magnetic disk, optical disk), and includes several instructions which enables a terminal (which may be a mobile phone, computer, server, air conditioner, or network device, etc.) to execute the methods described in various embodiments of the present disclosure.

The embodiments of the present disclosure have been described above in conjunction with the accompanying drawings. However, the present disclosure is not limited to the above specific implementations. The above specific implementations are only illustrative and not restrictive. In view of the present disclosure, persons having ordinary skill in the art may make modifications without departing from the spirit of the present disclosure and scope of claims, all of which fall within the protection of the present disclosure.

## Claims

1. An information processing method, comprising:
selecting, by a user equipment (UE), a target resource pool from available resource pool(s) of logical channels and/or MAC CE(s), when performing data transmission on a sidelink interface; or, performing, by the UE, LCP procedure according to a resource type of a scheduled resource, when performing data transmission on a sidelink interface.

2. The method according to claim 1, wherein the performing, by the UE, LCP procedure according to a resource type of a scheduled resource, includes:
determining, by the UE, a target resource type of a resource scheduled by a SCI, and
performing, by the UE, one or more of the following according to the target resource type:
selecting a target L2 destination of a sidelink;
selecting logical channel(s) for a sidelink;
selecting MAC CE(s) for a sidelink.

3. The method according to claim 2, wherein the target resource type includes at least one of common resource and dedicated resource;
the dedicated resource includes sidelink interface discovery dedicated resource and/or sidelink interface communication dedicated resource.

4. The method according to claim 3, wherein the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

5. The method according to claim 2, wherein the determining, by the UE, a target resource type of a resource scheduled by a SCI, includes at least one of the following:
determining, by the UE, the target resource type according to resource pool configuration information;
determining, by the UE, the target resource type according to scheduling information of a network device.

6. The method according to claim 5, wherein the resource pool configuration information is pre-configured, or configured by the network device through broadcast or dedicated signaling.

7. The method according to claim 5, wherein the scheduling information includes indication information of the target resource type; the determining, by the UE, the target resource type according to scheduling information of a network device, includes:
determining, by the UE, the target resource type according to the indication information of the target resource type.

8. The method according to claim 5, wherein the determining, by the UE, the target resource type according to resource pool configuration information, includes:
obtaining, by the UE, a resource pool to which the resource belongs, included in the scheduling information;
determining, by the UE, the target resource type according to the resource pool to which the resource belongs.

9. The method according to claim 2, wherein the UE selects the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

10. The method according to claim 2, wherein the UE selects the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink, in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

11. The method according to claim 1, wherein the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

12. The method according to claim 3 or 11, wherein when the UE is configured with both a common resource pool and a discovery-specific resource pool, the common resource pool is regarded as a communication-specific resource pool.

13. An information processing device, applied to a user equipment (UE), comprising: a memory, a transceiver, and a processor;
wherein the memory is used to store computer programs; the transceiver is used to send and receive data under control of the processor; the processor is used to read the computer programs in the memory and perform the following operations:
selecting a target resource pool from available resource pool(s) of logical channels and/or MAC CE(s) when performing data transmission on a sidelink interface; or, performing LCP procedure according to a resource type of a scheduled resource when performing data transmission on a sidelink interface.

14. The device according to claim 13, wherein the processor is used to read the computer programs in the memory and perform the following operations:
determining a target resource type of a resource scheduled by a SCI, and
performing one or more of the following according to the target resource type:
selecting a target L2 destination of a sidelink;
selecting logical channel(s) for a sidelink;
selecting MAC CE(s) for a sidelink.

15. The device according to claim 14, wherein the target resource type includes at least one of common resource and dedicated resource;
the dedicated resource includes sidelink interface discovery dedicated resource and/or sidelink interface communication dedicated resource.

16. The device according to claim 14 or 15, wherein the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

17. The device according to claim 14, wherein the processor is used to read the computer programs in the memory and perform the following operations:
determining the target resource type according to resource pool configuration information;
determining the target resource type according to scheduling information of a network device.

18. The device according to claim 17, wherein the resource pool configuration information is pre-configured, or configured by the network device through broadcast or dedicated signaling.

19. The device according to claim 17, wherein the scheduling information includes indication information of the target resource type; the processor is used to read the computer programs in the memory and perform the following operations:
determining the target resource type according to the indication information of the target resource type.

20. The device according to claim 17, wherein the processor is used to read the computer programs in the memory and perform the following operations:
obtaining a resource pool to which the resource belongs, included in the scheduling information;
determining the target resource type according to the resource pool to which the resource belongs.

21. The device according to claim 14, wherein the processor is used to read the computer programs in the memory and perform the following operations:
selecting the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

22. The device according to claim 14, wherein the processor is used to read the computer programs in the memory and perform the following operations:
selecting the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

23. The device according to claim 13, wherein the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

24. The device according to claim 13 or 23, wherein when the UE is configured with both a common resource pool and a discovery-specific resource pool, the common resource pool is regarded as a communication-specific resource pool.

25. An information processing device applied to a user equipment (UE), comprising:
a first selection unit configured to select a target resource pool from available resource pool(s) of logical channels and/or MAC CE(s) when performing data transmission on a sidelink interface; or,
a first processing unit configured to perform LCP procedure according to a resource type of a scheduled resource when performing data transmission on a sidelink interface.

26. The device according to claim 25, wherein the first processing unit includes:
a first determination subunit configured to determine a target resource type of a resource scheduled by a SCI, and
a first processing subunit configured to perform one or more of the following according to the target resource type:
selecting a target L2 destination of a sidelink;
selecting logical channel(s) for a sidelink;
selecting MAC CE(s) for a sidelink.

27. The device according to claim 26, wherein the target resource type includes at least one of common resource and dedicated resource;
the dedicated resource includes sidelink interface discovery dedicated resource and/or sidelink interface communication dedicated resource.

28. The device according to claim 27, wherein the sidelink interface discovery dedicated resource includes any of the following:
resources in a dedicated resource pool for a sidelink interface discovery;
resources in a dedicated resource pool for U2U relay discovery;
resources in a dedicated resource pool for U2N relay discovery;
resources in a dedicated resource pool for L2 U2N relay discovery;
resources in a dedicated resource pool for L2 U2U relay discovery;
resources in a dedicated resource pool for L3 U2N relay discovery;
resources in a dedicated resource pool for L3 U2U relay discovery;
or, the sidelink interface discovery dedicated resource includes any of the following:
resources in a dedicated resource pool for sidelink interface communication;
resources in a dedicated resource pool for U2U relay communication;
resources in a dedicated resource pool for U2N relay communication;
resources in a dedicated resource pool for L2 U2N relay communication;
resources in a dedicated resource pool for L2 U2U relay communication;
resources in a dedicated resource pool for L3 U2N relay communication;
resources in a dedicated resource pool for L3 U2U relay communication.

29. The device according to claim 26, wherein the first determining subunit is configured to perform any of the following:
determining the target resource type according to resource pool configuration information;
determining the target resource type according to scheduling information of a network device.

30. The device according to claim 29, wherein the resource pool configuration information is pre-configured, or configured by the network device through broadcast or dedicated signaling.

31. The device according to claim 29, wherein the scheduling information includes indication information of the target resource type; the first determining subunit is configured to determine the target resource type according to the indication information of the target resource type.

32. The device according to claim 29, wherein the first determining subunit includes:
a first obtaining module configured to obtain a resource pool to which the resource belongs, included in the scheduling information;
a first determining module configured to determine the target resource type according to the resource pool to which the resource belongs.

33. The device according to claim 26, wherein the first processing subunit is configured to select the target L2 destination of the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
wherein the preset condition at least includes: when the resource type is a dedicated resource, the MAC CE(s) and/or logical channel is allowed to use the dedicated resource.

34. The device according to claim 26, wherein the first processing subunit is configured to select the logical channel for the sidelink or the MAC CE(s) for the sidelink according to the target resource type in a manner including:
determining an MAC CE(s) or logical channel(s) with a highest priority from MAC CE(s) and logical channels that meet a preset condition and are corresponding to all communication types of the sidelink interface;
taking a target destination corresponding to the MAC CE(s) or logical channel with the highest priority as the target L2 destination of the sidelink;
selecting logical channel(s) and/or MAC CE(s) satisfying a preset condition as the logical channel of the sidelink and/or MAC CE(s) of the sidelink in logical channels or MAC CE(s) corresponding to the target L2 destination of the sidelink interface;
wherein the preset condition at least includes: when the resource type is a dedicated resource, the MAC CE(s) and/or logical channel is allowed to use the dedicated resource.

35. The device according to claim 25, wherein the available resource pool of the logical channel and/or MAC CE(s) is determined in any of the following manners:
taking the one or more dedicated resource pools as the available resource pool of the logical channel and/or MAC CE(s) if the logical channel and/or MAC CE(s) is capable of only using one or more dedicated resource pools;
taking the one or more shared resource pools as the available resource pool of the logical channel and/or MAC CE(s) if the logical channel and/or MAC CE(s) is capable of only using one or more shared resource pools;
taking the one or more shared resource pools and dedicated resource pools as the available resource pool of the logical channel and/or MAC CE(s) if the logical channel and/or MAC CE(s) is capable of using one or more shared resource pools and dedicated resource pools.

36. The device according to claim 27 or 35, wherein when the UE is configured with both a common resource pool and a discovery-specific resource pool, the common resource pool is regarded as a communication-specific resource pool.

37. A processor-readable storage medium, comprising a computer program stored thereon; wherein the computer program, when executed by a processor, causes the processor to perform the method according to any one of claims 1 to 12.
